# FASCICULE DE BREVET EUROPEEN

(11) **EP 3 212 384 B1**
(45) Date de publication et mention de la délivrance du brevet: **28.07.2021**
(21) Numéro de dépôt: 15791705.5
(22) Date de dépôt: 21.10.2015
(51) Int. Cl.: B29C 64/135, B33Y 10/00, B33Y 50/02

(54) **PROCEDE D'IMPRESSION EN TROIS DIMENSIONS**
VERFAHREN FÜR DREIDIMENSIONALES DRUCKEN
METHOD FOR THREE-DIMENSIONAL PRINTING

(30) Priorité: 27.10.2014 FR 1460282
(43) Date de publication de la demande: 06.09.2017
(73) Titulaire: Centre National de la Recherche Scientifique, 75016 Paris (FR)
(72) Inventeur: BALDECK, Patrice, F-38220 Vizille (FR); HEGGARTY, Kevin John, F-29290 Lanrivoare (FR)
(74) Mandataire: Novagraaf Technologies
(86) Numéro de dépôt international: PCT/FR2015/052831
(87) Numéro de publication internationale: WO 2016/066927

(56) Documents cités:
- EP-A1- 2 722 159
- Wai-Kei Chiu: "Title Hollowing and reinforcing 3D CAD models and representing multiple material objects for rapid prototyping", , 31 décembre 2000 (2000-12-31), pages 1-203, XP055206125, Extrait de l'Internet: URL:http://hub.hku.hk/bitstream/10722/3914 1/15/FullText.pdf?accept=1 [extrait le 2015-08-04]
- LIN LU ET AL: "Build-to-last", ACM TRANSACTIONS ON GRAPHICS, vol. 33, no. 4, 27 juillet 2014 (2014-07-27), pages 1-10, XP055206145, ISSN: 0730-0301, DOI: 10.1145/2601097.2601168

## Description

La présente demande de brevet revendique la priorité de la demande de brevet français FR14/60282.

### Domaine

La présente demande concerne un procédé d'impression en trois dimensions (3D), plus couramment appelé impression 3D, dans lequel on transforme successivement des volumes élémentaires, ou voxels, d'un matériau par irradiation.

### Exposé de l'art antérieur

Un procédé connu d'impression 3D basé sur des transformations successives de volumes élémentaires d'un matériau par irradiation utilise une réaction photochimique induite par absorption multiphotonique à au moins deux photons. Une imprimante mettant en oeuvre un tel procédé est couramment appelée imprimante 3D à absorption à deux photons.

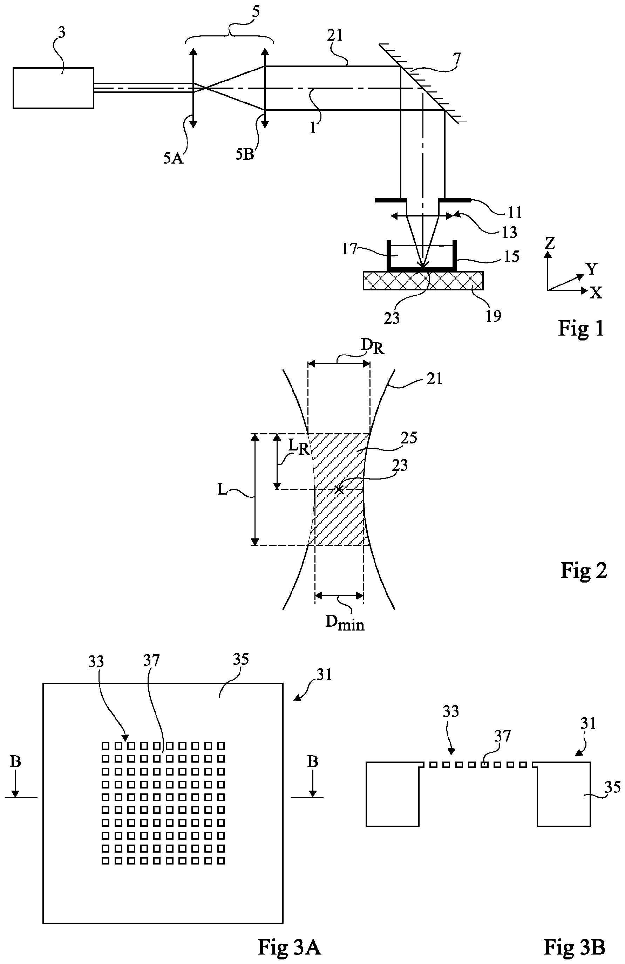

La figure 1 représente schématiquement un exemple d'imprimante 3D à absorption à deux photons. L'imprimante 3D comprend successivement, sur un axe optique 1, une source laser 3, un agrandisseur de faisceau 5, un miroir plan 7, un diaphragme 11, et un objectif de focalisation 13. Dans l'exemple représenté, l'agrandisseur de faisceau 5 comprend deux lentilles 5A et 5B. Un bac 15 rempli d'un matériau photosensible 17 repose sur une table XYZ 19 pouvant être déplacée selon des directions orthogonales (XY) et parallèle (Z) à la direction de propagation d'un faisceau laser 21 généré par la source 3, et pouvant optionnellement tourner autour d'axes de rotation X, Y et Z. Le matériau photosensible 17 peut comprendre une résine se solidifiant par polymérisation ou photo-réticulation, une résine dont les propriétés de solubilité se modifient par photochimie, des protéines se solidifiant par photo-réticulation, ou des sels métalliques se solidifiant par photo-réticulation. On considère ci-après à titre d'exemple le cas où le matériau est une résine se solidifiant par photo-réticulation.

En fonctionnement, le faisceau laser 21 est focalisé par l'objectif 13 en un point 23 situé dans le matériau 17. Au point de focalisation 23, lorsque la puissance du laser est suffisante, un volume élémentaire du matériau 17 est transformé et se solidifie. En figure 1, le point 23 est représenté comme étant au fond du bac 15. La table XYZ 19 est commandée de sorte que le point de focalisation 23 du faisceau 21 est déplacé dans le matériau 17 pour former d'autres voxels jusqu'à ce que tout le volume de l'objet à imprimer ait été solidifié, l'excédent de matériau non transformé étant par exemple dissous par un solvant approprié.

La figure 2 est une vue en coupe illustrant schématiquement l'allure de la zone de focalisation du faisceau laser 21. Au niveau de son point de focalisation 23, le faisceau laser 21 présente une zone de convergence maximale pour laquelle le faisceau a un diamètre minimal (waist) Dₘᵢₙ. Le diamètre du faisceau augmente lorsqu'on s'éloigne de la zone de convergence maximale. En particulier, à une distance L_{R} (longueur de Rayleigh) de la zone de convergence maximale, l'énergie par unité de surface du faisceau laser est égale à la moitié de l'énergie par unité de surface au niveau de la zone de convergence maximale.

On appelle volume focal 25 la portion volumique du faisceau laser 21 centrée sur la zone de convergence maximale et de longueur L égale à deux fois la longueur de Rayleigh L_{R}. A titre d'exemple, on considère dans la suite que le volume focal 25 correspond à la portion volumique du faisceau laser 21 dans laquelle l'énergie par unité de surface du faisceau 21 est suffisante pour induire une réaction photochimique par absorption à deux photons entraînant la formation d'un voxel de mêmes dimensions Dₘᵢₙ et L que ce volume focal 25, L désignant alors la hauteur d'un voxel. En pratique, selon l'intensité du faisceau laser incident et le temps d'exposition du matériau photosensible au faisceau, un voxel de matière solide ayant un volume différent de celui du volume focal peut être obtenu. Par exemple, un voxel peut avoir sensiblement la forme d'une olive de diamètre Dₘᵢₙ et de hauteur L. On montre que L est proportionnel au carré de Dₘᵢₙ. A titre d'exemple, pour Dₘᵢₙ=0,25 µm, on a L=0,7 µm. Si on multiplie par 100 la dimension Dₘᵢₙ, la valeur de L est multipliée par 10000, c'est-à-dire que l'on obtient des voxels extrêmement étirés (Dₘᵢₙ=25 µm et L=7 mm dans cet exemple). La résolution en Z est alors insuffisante pour imprimer un objet 3D, même avec une résolution millimétrique.

Les imprimantes 3D à absorption à deux photons ont donc essentiellement été développées pour la fabrication d'objets nécessitant une haute résolution de l'ordre du micromètre, voire de la centaine de nanomètres, et sont généralement utilisées pour la fabrication d'objets dont les dimensions sont inférieures au millimètre.

Les figures 3A et 3B représentent schématiquement un exemple d'objet à imprimer en 3D, la figure 3A étant une vue de dessus de l'objet, et la figure 3B étant une vue en coupe selon un plan BB de la figure 3A. L'objet à imprimer est un filtre 31 comprenant une grille de filtration 33 solidaire d'une bague 35. La grille, ou tamis, 33 comporte des motifs extrêmement fins qui doivent être réalisés avec une haute résolution tandis que la bague 35 ne nécessite pas une très haute résolution.

La grille 33 comporte un réseau de barreaux 37 de petites dimensions ayant, par exemple, une largeur de 0,1 µm avec un intervalle entre barreaux de 0,2 µm. La bague 35, de forme carrée, a par exemple une hauteur de 0,6 cm, une épaisseur de 0,4 cm, et un diamètre interne de 0,8 cm.

Si on souhaite fabriquer le filtre 31 avec l'imprimante 3D de la figure 1 on devra, pour imprimer la grille 33 avec la précision souhaitée, choisir une imprimante telle que les voxels aient des dimensions inférieures ou égales à une centaine de nanomètres, ce qui entraîne que, pour imprimer la bague 35 ayant des dimensions millimétriques au moins 10000 fois supérieures à celles des voxels, les temps d'impression deviennent très longs.

Il existe donc un besoin d'un procédé d'impression 3D par irradiations successives d'un matériau permettant de réduire les temps d'impression d'objets comprenant des parties à imprimer avec une haute résolution et des parties pouvant être imprimées avec une résolution plus faible, par exemple au moins 100 fois plus faible.

La thèse intitulée "Hollowing and reinforcing 3D CAD models and representing multiple material objects for rapid prototying" et la demande de brevet EP 2722159 proposent de remplacer des parties pleines d'un objet à imprimer par des briques creuses identiques.

### Résumé

Ainsi, un mode de réalisation prévoit un procédé d'impression 3D, dans lequel on transforme séquentiellement des volumes élémentaires, ou voxels, d'un matériau par irradiation, comprenant les étapes suivantes : décomposer le volume d'une partie d'un objet à imprimer ne nécessitant pas une résolution maximale en blocs identiques ; associer, pour l'impression, à chaque bloc une brique de même contour comprenant des portions creuses ; et procéder à une succession d'irradiations, chaque irradiation fournissant un réseau de faisceaux d'irradiation focalisés en un réseau de points répartis dans le matériau de la même façon lors de deux irradiations successives, le réseau de points étant décalé dans le matériau entre deux irradiations successives.

Selon un mode de réalisation, lors de certaines irradiations, certains faisceaux sont inhibés.

Selon un mode de réalisation, le réseau de points est décalé dans le matériau en déplaçant un bac rempli du matériau.

Selon un mode de réalisation, le réseau de points est décalé dans le matériau d'une quantité inférieure aux dimensions d'un voxel.

Selon un mode de réalisation, le réseau de points correspond à un réseau de voxels dont chacun est situé à une position donnée d'une brique distincte.

Selon un mode de réalisation, le réseau de points correspond à un réseau de voxels dont chacun est situé à une position donnée d'une même brique.

Selon un mode de réalisation, la transformation d'un voxel résulte d'une réaction photochimique induite par absorption de deux photons.

Selon un mode de réalisation, les dimensions desdits blocs sont au moins 100 fois supérieures à celles des voxels.

Selon un mode de réalisation, la partie ne nécessitant pas la résolution maximale a des dimensions au moins 100 fois supérieures à la résolution maximale.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1, décrite précédemment, est une représentation schématique d'un exemple d'imprimante 3D à absorption à deux photons ;
la figure 2, décrite précédemment, illustre schématiquement l'allure d'un faisceau laser au niveau de son point de focalisation ;
les figures 3A et 3B, décrites précédemment, représentent schématiquement un exemple d'objet 3D à imprimer ;
la figure 4 illustre schématiquement une étape d'un mode de réalisation d'un procédé d'impression 3D ;
les figures 5A à 5C représentent schématiquement différents modes de réalisation d'un procédé d'impression 3D ;
la figure 6 est une représentation schématique d'un autre exemple d'imprimante 3D à absorption à deux photons ; et
les figures 7A à 7E illustrent schématiquement des étapes d'un mode de réalisation d'un procédé d'impression 3D.

Par souci de clarté, de mêmes éléments ont été désignés par de mêmes références aux différentes figures et, de plus, les diverses figures ne sont pas tracées à l'échelle.

### Description détaillée

On propose ici un procédé d'impression 3D dans lequel les parties d'un objet 3D ayant des dimensions très supérieures à celles d'un voxel sont imprimées à partir de briques de voxels comportant des portions creuses.

Dans la suite de la description des références directionnelles telles que "sur", "latéral", "supérieur", "inférieur", "gauche", "droite", etc., s'appliquent à des dispositifs orientés de la façon illustrée dans les vues en coupe correspondantes, étant entendu que, dans la pratique, ces dispositifs peuvent être orientés différemment.

Dans une étape initiale d'analyse de l'objet à imprimer, on identifie les parties de cet objet nécessitant d'être imprimées avec une haute résolution et les parties de cet objet pouvant être imprimées avec une plus faible résolution, ces dernières ayant des dimensions très supérieures à celles des parties nécessitant une haute résolution, par exemple 100 à 1000 fois supérieures, voire plus de 10000 fois supérieures. Par exemple, pour le filtre 31, la grille 35 devra être imprimée avec une haute résolution de l'ordre de la centaine de nanomètres, et l'imprimante 3D est choisie pour que le diamètre Dₘᵢₙ et la hauteur L des voxels soient par exemple égaux à 0,1 µm et à 0,3 µm. Une résolution plus faible, par exemple de l'ordre du millimètre, pourra être choisie pour imprimer la bague 35, et les dimensions du volume focal, et donc des voxels, pourront alors être augmentées en utilisant un objectif de focalisation de plus faible résolution pour que le diamètre Dₘᵢₙ et la hauteur L des voxels soient par exemple égaux à 1 µm et à 10 µm.

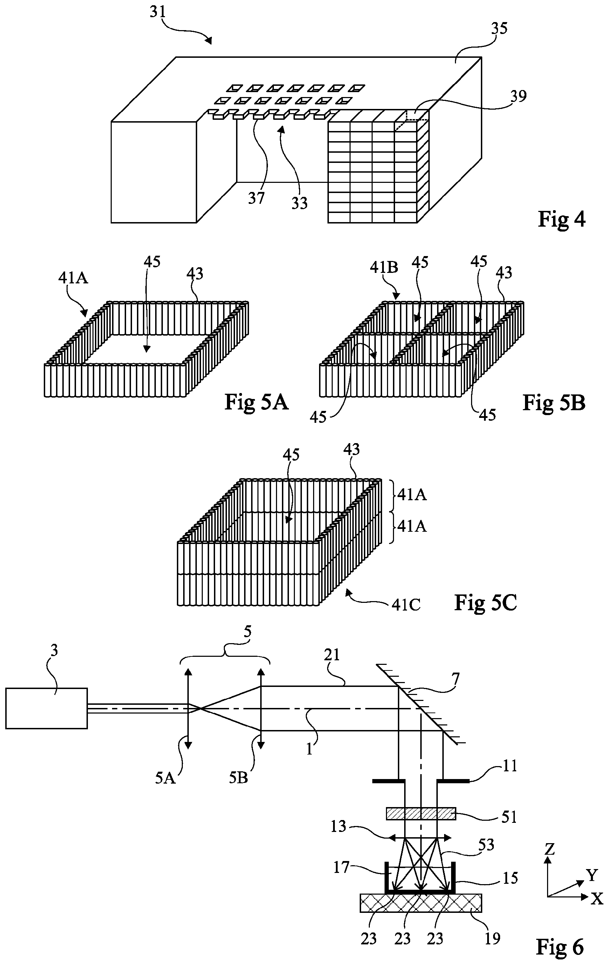

La figure 4 est une vue schématique en perspective et en coupe du filtre 31 selon le plan BB de la figure 3A. Le volume des parties ne nécessitant pas d'être imprimées avec une haute résolution, ici le volume de la bague 35, est décomposé en blocs identiques 39. Les dimensions latérales des blocs 39 sont choisies supérieures, par exemple au moins 10 fois supérieures, et de préférence au moins 100 à 1000 fois supérieures, à celles des voxels utilisés pour leur impression. Pour des raisons de clarté, on n'a représenté que quelques blocs 39 résultant d'une telle décomposition, à droite sur la figure. Dans cet exemple, les blocs 39 sont des parallélépipèdes rectangles ayant par exemple des côtés d'environ 1 mm et une hauteur de 10 µm égale à la hauteur L des voxels utilisés pour les imprimer.

Afin de fabriquer des parties d'un objet à imprimer ne nécessitant pas une haute résolution, on imprime pour chaque bloc 39 une brique de voxels de même contour et comprenant une ou plusieurs portions creuses. Chaque brique est réalisée en imprimant, par exemple successivement, chacun des voxels la constituant.

Selon une variante, on peut n'imprimer des briques de voxels qu'au niveau de la surface des parties ne nécessitant pas d'être imprimées avec une haute résolution, sur une épaisseur suffisante pour assurer une bonne rigidité mécanique de ces parties.

On pourra en outre prévoir de former une couche étanche recouvrant les surfaces externes d'un volume donné.

Les figures 5A, 5B et 5C sont des vues en perspective illustrant schématiquement des exemples de briques de voxels comprenant une ou plusieurs portions creuses. Dans ces figures, les voxels 43 ne sont pas tracés à l'échelle et, en pratique, chaque brique comprend un nombre de voxels beaucoup plus grand que celui représenté dans ces figures.

En figure 5A, la brique 41A est définie par un contour de voxels 43 correspondant à son périmètre. Dans cet exemple, chacun des côtés supérieur et inférieur de la brique comprend un nombre m de voxels, et chacun des côtés droit et gauche de la brique comprend un nombre n de voxels.

En figure 5B, la brique 41B comprend en outre un croisillon médian.

En figure 5C, la brique 41C comprend deux briques 41A empilées l'une sur l'autre.

Comme cela est représenté dans les figures 5A à 5C, chaque voxel 43 peut pénétrer en partie dans ses voxels 43 voisins ce qui permet d'augmenter la stabilité mécanique de la brique. On comprendra que, bien que l'on ait représenté des briques de voxels 43 comprenant des lignes de voxels constituées d'une seule rangée de voxels, dans des variantes de réalisation, les lignes de voxels peuvent comprendre plusieurs rangées de voxels.

On voit dans les figures 5A à 5C que chacune des briques 41A, 41B et 41C comprend dans sa portion centrale une ou plusieurs parties creuses 45 dans lesquelles aucun voxel n'est formé. Contrairement aux procédés d'impression 3D de l'art antérieur dans lesquels on imprimerait un grand nombre de voxels 43 pour remplir l'intégralité de chaque volume correspondant à un bloc 39, dans le procédé décrit ici, on imprime des voxels uniquement dans les parties pleines de chaque brique correspondant à un bloc 39. Ainsi, le nombre de voxels imprimés est beaucoup plus faible, d'où il résulte que les temps d'impression de la bague 35 et donc du filtre 31 sont grandement diminués.

Comme cela a déjà été mentionné précédemment, les voxels constitutifs des briques 41A, 41B et 41C peuvent être imprimés l'un après l'autre. Les inventeurs proposent également d'imprimer plusieurs voxels simultanément.

La figure 6 représente schématiquement un autre exemple d'imprimante 3D à absorption à deux photons permettant l'impression de plusieurs voxels simultanément.

L'imprimante comprend sur son axe optique 1 de mêmes éléments que l'imprimante 3D de la figure 1, à savoir une source laser 3, un agrandisseur de faisceau 5, un miroir plan 7, un diaphragme 11 et un objectif de focalisation 13. L'imprimante comprend en outre des moyens 51 pour générer, de préférence simultanément, un nombre k de faisceaux laser 53 formant un réseau de faisceaux d'irradiation. Les k faisceaux du réseau sont focalisés par l'objectif 13 en un réseau de k points 23 dans un matériau photosensible 17 contenu dans un bac 15 reposant sur une table XYZ 19.

Ainsi, un réseau de k voxels correspondant au réseau de k points de focalisation peut être formé à chaque irradiation du matériau 17. Du fait que k voxels d'un réseau sont formés simultanément à chaque irradiation, il en résulte une diminution d'un facteur k des temps d'impression par rapport à un procédé d'impression dans lequel un seul voxel est formé à chaque irradiation.

A titre d'exemple, pour générer simultanément k faisceaux laser d'un réseau focalisés en un réseau de k points, on peut utiliser des moyens tels que des matrices de microlentilles, des masques de phase diffractifs, des matrices de cristaux liquides à modulation de phase et/ou d'amplitude, et des matrices de micro-miroirs. Divers exemples de ces moyens sont décrits dans la littérature, notamment dans :
- "White-light-modified Talbot array illuminator with a variable density of light spots" de E. Tajahuerce et al., 10 juillet 1998, Applied Optics, volume 37, numéro 20 ;
- "Binary surface-relief gratings for array illumination in digital optics" de A. Vasara et al., 10 juin 1992, Applied Optics, volume 31, numéro 17 ; et
- "Multiple-spot parallel processing for laser micronanofabrication" de J. Kato et al., 2005, Applied Physics Letters 86.

Par exemple, en utilisant un masque de phase approprié associé à un laser à impulsions nanosecondes amplifiées de 1 watt à 130 kHz, plus de 1000 voxels peuvent être formés simultanément en quelques millisecondes dans une résine commerciale.

Selon un mode de réalisation, k briques identiques sont fabriquées simultanément à partir d'un réseau donné de k points de focalisation. Pour cela, les k points de focalisation du réseau sont choisis pour que chacun corresponde à une position donnée (par exemple le coin supérieur gauche) de k briques distinctes. On construit les k briques en déplaçant le bac 15 entre chaque irradiation jusqu'à former tous les voxels constitutifs des k briques.

Ainsi, pour fabriquer simultanément k briques, les conditions de focalisation des k faisceaux laser 53 du réseau ne sont déterminées qu'une seule fois, et les déplacements du bac 15 sont déterminés très simplement à partir des décalages entre les voxels d'une des briques à imprimer. Il en résulte une diminution des temps de calcul des conditions de focalisation et des déplacements du bac 15, et donc une diminution du temps d'impression. A titre d'exemple, la réalisation d'une surface d'un centimètre carré à partir de briques d'un millimètre de côté comprenant des portions creuses carrées d'environ dix micromètres de côté en imprimant simultanément k=2401 voxels à chaque irradiation nécessite seulement 10 minutes alors qu'avec les procédés de l'art antérieur un temps d'impression supérieur à 2500 heures est nécessaire pour imprimer une même surface d'une couche continue de voxels.

On peut prévoir de moduler les intensités des k faisceaux d'un réseau, par exemple avec une matrice de cristaux liquides. D'une part, on peut prévoir d'homogénéiser l'intensité de chaque faisceau au niveau du point focal correspondant de manière à ce que tous les voxels formés simultanément lors d'une irradiation aient des dimensions identiques. D'autre part, lors d'une irradiation, on peut prévoir d'obturer certains des k faisceaux du réseau. Dans ce cas, aucun voxel n'est formé au niveau des points focaux correspondant aux faisceaux obturés. Cela permet par exemple de n'imprimer qu'une partie seulement des voxels d'une brique, notamment au voisinage de la surface d'un volume donné pour que les contours de la brique épousent cette surface.

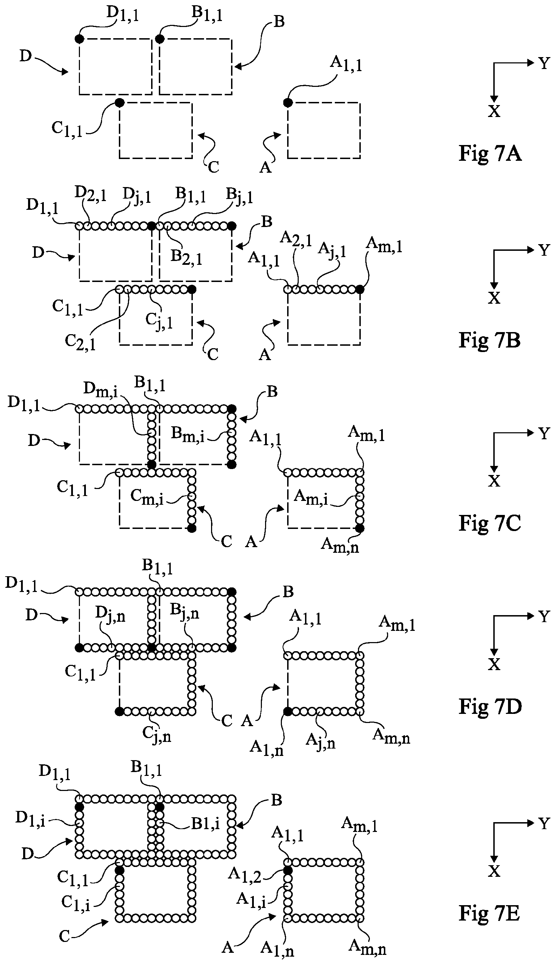

Les figures 7A à 7E sont des vues de dessus du matériau 17 de la figure 6 illustrant des étapes successives d'un tel mode de réalisation d'un procédé d'impression 3D. Dans cet exemple, k=4 et on fabrique quatre briques du type de la brique 41A de la figure 5A. En figures 7A à 7E, on a représenté par des cercles pleins les voxels d'un réseau imprimés simultanément lors de la dernière irradiation, par un cercle vide les voxels imprimés précédemment, et par des traits pointillés les contours de k briques A, B, C et D à imprimer. Dans ces figures, les voxels ne sont pas tracés à l'échelle et, en pratique, chaque brique comprend un nombre de voxels beaucoup plus grand que celui représenté dans ces figures.

En figure 7A, les conditions de focalisation de chaque faisceau d'un réseau de k faisceaux laser 53 d'une imprimante 3D du type de celle de la figure 6 ont été choisies pour obtenir un réseau donné de k points de focalisation 23 dans le matériau 17, chaque point de focalisation 23 correspondant, dans cet exemple, au coin supérieur gauche de chacune des k briques A, B, C et D. L'irradiation du matériau 17 permet alors de former simultanément des voxels A_{1,1}, B_{1,1}, C₁, ₁ et D_{1,1}. Dans cet exemple, les k points de focalisation 23 appartiennent à un même plan XY.

En figure 7B, sans modifier le réseau donné des k points de focalisation, le bac 15 est déplacé dans le plan XY d'une quantité correspondant à l'écart entre le voxel A_{1,1} et son voxel voisin A_{2,1} du côté supérieur de la brique A. Le matériau 17 est alors irradié pour former ce voxel A_{2,1}. Lors de la formation du voxel A_{2,1}, les voxels B_{2,1}, C_{2,1} et D_{2,1} des briques B, C et D sont formés simultanément. Les étapes de déplacement et d'irradiation sont ensuite répétées jusqu'à former successivement chacun des m voxels A_{j,1}, B_{j,1}, C_{j,1} et D_{j,1} du côté supérieur des briques A, B, C et D, j étant un entier compris entre 1 et m.

En figure 7C, les étapes de déplacement et d'irradiation sont répétées jusqu'à former successivement chacun des n voxels A_{m,i}, B_{m,i}, C_{m,i} et D_{m,i} du côté droit des briques A, B, C et D, i étant un entier compris entre 1 et n.

En figure 7D, les étapes de déplacement et d'irradiation sont répétées jusqu'à former successivement chacun des m voxels A_{j,n}, B_{j,n}, C_{j,n} et D_{j,n} du côté inférieur des briques A, B, C et D.

En figure 7E, les étapes de déplacement et d'irradiation sont répétées jusqu'à former successivement chacun des n-1 voxels A_{1,j}, B_{1,j}, C_{1,j} et D_{1,j} en s'arrêtant aux voxels A_{2,1}, B_{2,1}, C_{2,1} et D_{2,1}. On obtient finalement tous les voxels A_{i,j}, B_{i,j}, C_{i,j} et D_{i,j} constitutifs des briques A, B, C et D.

De préférence, dans une partie de l'objet à imprimer ne nécessitant pas une résolution maximale, on fabrique simultanément toutes les briques constitutives d'une couche de cette partie. Dans le cas où le nombre k de faisceaux d'un réseau n'est pas suffisant pour former toutes les briques constitutives d'une couche, on forme les autres briques à partir d'un ou plusieurs nouveaux réseaux de k points de focalisation 23.

Pour imprimer une couche suivante de l'objet, le bac 15 est déplacé selon l'axe Z par exemple d'une quantité inférieure ou égale à la hauteur L d'un voxel.

On a décrit précédemment un procédé d'impression 3D de parties d'un objet ne nécessitant pas une haute résolution d'impression à partir de briques creuses de voxels et un mode de réalisation consistant à fabriquer k briques simultanément. Diverses variantes et modifications apparaîtront à l'homme de l'art parmi lesquelles on peut mentionner les suivantes.
- L'objet à imprimer peut comprendre plus de deux zones de résolutions différentes. Dans ce cas les volumes des parties de cet objet ne nécessitant pas une haute résolution d'impression sont décomposés à partir de blocs 39 de différentes dimensions.
- Tout type de procédé d'impression 3D basé sur des irradiations successives d'un matériau photosensible peut être utilisé, et pas uniquement des procédés d'impression 3D à absorption à deux photons.
- Les dimensions et la forme des blocs, des briques et des voxels peuvent être modifiées. Par exemple, des briques rondes ou hexagonales (en nid d'abeille) peuvent être imprimées, les déplacements du ou des points de focalisation 23 dans le matériau 17 étant alors adaptés aux formes de ces briques.

- Entre chaque irradiation du matériau 17, le ou les points de focalisation 23 peuvent être déplacés dans ce matériau d'une quantité supérieure à l'écart entre deux voxels voisins.
- Les déplacements du ou des points de focalisation 23 dans le matériau 17 peuvent être réalisés en contrôlant les réglages du système optique de l'imprimante 3D plutôt qu'en déplaçant le bac 15 contenant ce matériau 17 par rapport au système optique de l'imprimante 3D.
- Les parties à haute résolution peuvent être réalisées couche par couche avant ou après l'impression, dans chaque couche, de briques correspondant à des parties à plus faible résolution. Si le type de matériau photosensible le permet, les parties à haute résolution peuvent être imprimées avant ou après l'impression de l'ensemble d'une ou plusieurs parties à plus faible résolution.

Dans le cas du mode de réalisation consistant à imprimer simultanément plusieurs briques, on peut mentionner les variantes et les modifications suivantes.
- Au lieu d'imprimer k voxels de k briques distinctes, un réseau donné de k points de focalisation 23 peut être choisi de sorte que les k points 23 de ce réseau correspondent à une même brique ou à un nombre réduit de briques.
- Au lieu de fabriquer simultanément plusieurs briques d'une même couche, plusieurs briques peuvent être fabriquées simultanément dans différentes couches en choisissant un réseau donné de k points de focalisation 23 répartis dans plusieurs plans XY.
- Les k faisceaux laser 53 d'un réseau peuvent être générés et focalisés par tout type de moyen connu plutôt qu'avec les moyens 51 décrits en figure 6.

Divers modes de réalisation avec diverses variantes ont été décrits ci-dessus. On notera que l'homme de l'art pourra combiner divers éléments de ces divers modes de réalisation et variantes sans faire preuve d'activité inventive.

## Revendications

1. Procédé d'impression 3D, dans lequel on transforme séquentiellement des volumes élémentaires, ou voxels (43), d'un matériau (17) par irradiation, comprenant les étapes suivantes :
décomposer le volume d'une partie (35) d'un objet (31) à imprimer ne nécessitant pas une résolution maximale en blocs identiques (39) ;
associer, pour l'impression, à chaque bloc une brique (41A, 41B, 41C) de même contour comprenant des portions creuses (45) ; et **caractérisé par** l'étape consistant à
procéder à une succession d'irradiations pour imprimer les voxels des briques, chaque irradiation fournissant un réseau de faisceaux d'irradiation (53) focalisés en un réseau de points (23) répartis dans le matériau (17) de la même façon lors de deux irradiations successives, le réseau de points étant décalé dans le matériau entre deux irradiations successives.

2. Procédé selon la revendication 1, dans lequel, lors de certaines irradiations, certains faisceaux (53) sont inhibés.

3. Procédé selon la revendication 1 ou 2, dans lequel le réseau de points (23) est décalé dans le matériau (17) en déplaçant un bac (15) rempli du matériau.

4. Procédé selon l'une quelconque des revendications 1 à 3, dans lequel le réseau de points (23) est décalé dans le matériau d'une quantité inférieure aux dimensions (Dₘᵢₙ) d'un voxel (43).

5. Procédé selon l'une quelconque des revendications 1 à 4, dans lequel le réseau de points (23) correspond à un réseau de voxels (43) dont chacun est situé à une position donnée d'une brique distincte (41A, 41B, 41C).

6. Procédé selon l'une quelconque des revendications 1 à 5, dans lequel le réseau de points (23) correspond à un réseau de voxels (43) dont chacun est situé à une position donnée d'une même brique (41A, 41B, 41C).

7. Procédé selon l'une quelconque des revendications 1 à 6, dans lequel la transformation d'un voxel (43) résulte d'une réaction photochimique induite par absorption de deux photons.

8. Procédé selon l'une quelconque des revendications 1 à 7, dans lequel les dimensions desdits blocs (39) sont au moins 100 fois supérieures à celles des voxels (43).

9. Procédé selon l'une quelconque des revendications 1 à 8, dans lequel la partie (35) ne nécessitant pas la résolution maximale a des dimensions au moins 100 fois supérieures à la résolution maximale.

## Patentansprüche

1. 3D-Druckverfahren, wobei Elementarvolumina oder Voxel (43) eines Materials (17) aufeinanderfolgend durch Bestrahlung umgewandelt werden, umfassend die folgenden Schritte:
Zerlegen des Volumens eines Teils (35) eines zu druckenden Objekts (31), der keine maximale Auflösung erfordert, in identische Blöcke (39);
zum Drucken Zuordnen eines Bausteins (41A, 41B, 41C) mit gleichem Umriss, der hohle Abschnitte (45) umfasst, zu jedem Block; und das **gekennzeichnet ist durch** den aus Folgendem bestehenden Schritt:
Fortfahren mit einer Abfolge von Bestrahlungen, um die Voxel der Bausteine zu drucken, wobei jede Bestrahlung ein Gitter von Bestrahlungsstrahlen (53) bereitstellt, die auf ein Gitter von in dem Material (17) verteilten Punkten (23) während zwei aufeinanderfolgender Bestrahlungen auf die gleiche Weise fokussiert sind, wobei das Gitter von Punkten zwischen zwei aufeinanderfolgenden Bestrahlungen in dem Material verschoben ist.

2. Verfahren nach Anspruch 1, wobei während bestimmter Bestrahlungen bestimmte Strahlen (53) gehemmt werden.

3. Verfahren nach Anspruch 1 oder 2, wobei das Gitter von Punkten (23) durch Verrücken eines mit dem Material gefüllten Behälters (15) in dem Material (17) verschoben wird.

4. Verfahren nach einem der Ansprüche 1 bis 3, wobei das Gitter von Punkten (23) in dem Material um einen Betrag verschoben wird, der geringer als die Abmessungen (Dₘᵢₙ) eines Voxels (43) ist.

5. Verfahren nach einem der Ansprüche 1 bis 4, wobei das Gitter von Punkten (23) einem Gitter von Voxeln (43) entspricht, von denen jedes an einer gegebenen Position eines separaten Bausteins (41A, 41B, 41C) gelegen ist.

6. Verfahren nach einem der Ansprüche 1 bis 5, wobei das Gitter von Punkten (23) einem Gitter von Voxeln (43) entspricht, von denen jedes an einer gegebenen Position eines selben Bausteins (41A, 41B, 41C) gelegen ist.

7. Verfahren nach einem der Ansprüche 1 bis 6, wobei das Umwandeln eines Voxels (43) aus einer photochemischen Reaktion resultiert, die durch Absorption von zwei Photonen induziert wird.

8. Verfahren nach einem der Ansprüche 1 bis 7, wobei die Abmessungen der Blöcke (39) mindestens 100-mal größer als die der Voxel (43) sind.

9. Verfahren nach einem der Ansprüche 1 bis 8, wobei der Teil (35), der nicht die maximale Auflösung erfordert, Abmessungen besitzt, die mindestens 100-mal größer als die maximale Auflösung sind.

## Claims

1. 3D printing method, wherein elementary volumes, or voxels (43), of a material (17) are sequentially transformed by irradiation, comprising the following steps:
breaking down the volume of a part (35) of an object (31) to be printed which does not require a maximum resolution into identical blocks (39);
associating, for printing, with each block a brick (41A, 41B, 41C) of the same outline comprising hollow portions (45); and **characterized by** the step of
carrying out a succession of irradiations in order to print the voxels of the bricks, each irradiation providing an array of irradiation beams (53) focused in an array of points (23) distributed in the material (17) in the same way during two successive irradiations, the array of points being offset in the material between two successive irradiations.

2. Method according to claim 1, wherein certain beams (53) are inhibited during certain irradiations.

3. Method according to either claim 1 or claim 2, wherein the array of points (23) is offset in the material (17) by moving a container (15) filled with the material.

4. Method according to any of claims 1 to 3, wherein the array of points (23) is offset in the material by an amount less than the dimensions (Dₘᵢₙ) of a voxel (43).

5. Method according to any of claims 1 to 4, wherein the array of points (23) corresponds to an array of voxels (43), each of which is located at a given position of a separate brick (41A, 41B, 41C).

6. Method according to any of claims 1 to 5, wherein the array of points (23) corresponds to an array of voxels (43), each of which is located at a given position of the same brick (41A, 41B, 41C).

7. Method according to any of claims 1 to 6, wherein the transformation of a voxel (43) results from a photochemical reaction induced by absorption of two photons.

8. Method according to any of claims 1 to 7, wherein the dimensions of said blocks (39) are at least 100 times greater than those of the voxels (43).

9. Method according to any of claims 1 to 8, wherein the part (35) which does not require the maximum resolution has dimensions at least 100 times greater than the maximum resolution.
